(19) **Europäisches Patentamt** / **European Patent Office** / **Office européen des brevets**

(11) **EP 1 548 219 B1**

(12) **EUROPEAN PATENT SPECIFICATION**

(45) Date of publication and mention
of the grant of the patent:
**10.12.2008 Bulletin 2008/50**

(51) Int Cl.:
***E05F 11/38*** (2006.01)   ***B60J 1/17*** (2006.01)

(21) Application number: **03798939.9**

(22) Date of filing: **01.09.2003**

(86) International application number:
**PCT/ES2003/000442**

(87) International publication number:
**WO 2004/031519 (15.04.2004 Gazette 2004/16)**

(54) **IMPROVED WINDOW REGULATOR ASSEMBLY WHICH IS DESIGNED TO BE MOUNTED IN THE LOCK OF A MOTOR VEHICLE**

ZUR MONTAGE IM SCHLOSS EINES KRAFTFAHRZEUGS AUSGEFÜHRTE VERBESSERTE FENSTERHEBERANORDNUNG

ENSEMBLE LEVE-VITRES PERFECTIONNE CONCU POUR ETRE MONTE DANS LA SERRURE D'UNE AUTOMOBILE

(84) Designated Contracting States:
**AT BE BG CH CY CZ DE DK EE ES FI FR GB GR HU IE IT LI LU MC NL PT RO SE SI SK TR**

(30) Priority: **01.10.2002 ES 200202217**

(43) Date of publication of application:
**29.06.2005 Bulletin 2005/26**

(73) Proprietor: **Daumal Castellon, Melchor**
**08013 Barcelona (ES)**

(72) Inventor: **Daumal Castellon, Melchor**
**08013 Barcelona (ES)**

(74) Representative: **Morgades y Manonelles, Juan Antonio**
**Morgades & Del Rio, S.L.**
**C/Rector Ubach, 37-39 bj. 2.o**
**08021 Barcelona (ES)**

(56) References cited:
**EP-A- 0 359 610          DE-A1- 10 057 352**
**ES-B3- 2 013 307          FR-A- 2 537 928**
**US-B1- 6 170 199**

**Description**

The present invention refers to an improved window lift assembly adapted for being fitted in the lock of a motor vehicle, which novel manufacturing, conformation and design features fulfil the purpose to which it has been specifically conceived, with a maximum safety and effectiveness, and providing many advantages as it will be herein disclosed.

More particularly, the present invention refers to the design of the window lifting device for motor vehicles of the type of those being fixed in the lock device of the motor vehicle, that is, in which the track where the window pane driving slider is fixed to the lock device of the motor vehicle. In this particular type of window lift there is provided an additional slider within the frame of the door of the motor vehicle.

The invention provides a new design of said type of window lifting devices which calculation variables are defined in such a way that the stability of the assembly, which is the main problem to be overcome in these window lifting devices, as it will be herein disclosed, is completely guaranteed, further allowing to know the feasibility of a project for a window lift assembly to be fitted in a lock device.

The above mentioned disadvantage of the window lifting devices fixed to the lock of the motor vehicle lies basically in the uncertainty of the assembly in use, which is mainly due to the fact that both fixing of the window in the slider and the guiding thereof result in backlash and interferences which negatively influences the system operation. Backlash and interferences are indeed amplified to a large extent by the action of the cantilevered pane due to the fact that the window lifting device is mounted in the lock, that is, on a side end of the door.

Practice has clearly shown that the main problem in this type of window lifting devices resides in the difficulty of maintaining the system stable since, as outlined above, the pane may have a great length which consequently results in a high torque that makes the system unstable. In this sense, it should be especially stressed the fact that the load center, that is to say, the weight of the pane plus frictions, is located quite far from the center of thrust of the window lift driving cable.

With the aim of seeking an effective solution that allows to maintain the static and dynamic stability condition required for a window lifting device of the type of those being mounted in the lock of the door of a motor vehicle, the improved window lift assembly adapted for being fitted in the lock of a motor vehicle of the present invention has been developed, which will be herein fully described.

This window lift is, as noted above, of the type of which essentially comprises two guide and slider assemblies, one of which is fitted in the frame of the door and the other of which is fitted in the track of the window lift. It further comprises slider driving means that include an electric motor having a gearmotor. The sliders are fixed to the window pane and the assembly is mounted attached to the lock of the motor vehicle with the track secured thereto.

The invention ascertains the necessary conditions which the design variables should meet for the feasibility of a stable assembly. Said variables present in this calculation are those herein set forth:

$(Y_1)$: distance between two points of contact of the slider in the track measured on a line parallel to said track;
$(Y_2)$: distance from the upper edge of the pane to the fastening point of the slider of the door;
$(X_1)$: distance from an end of the track (which is secured to the door frame) to the points of contact of the slider in the track;
$(X_2)$: horizontal distance between two points of contact of the slider in the track;
$(H)$: height of the lower edge of the door of the vehicle to the belt line; and
$(h)$: height of the window of the vehicle.

The conditions which have to be met by said variables so that the design of this window lifting device is feasible are the following:

i) $(Y_1)$ should be the maximum value possible for generating the maximum resistive torque to withstand the weight of the pane and, at the same time, the condition that $(Y_1) < (H-h)$ should be also met in order to facilitate the assembly of the slider in the door;
ii) $(Y_2) < (h-Y_2)$ since the descent load is less than the ascent torque due to gravity. As the pane carries out an upward movement, the window lift should overcome friction and the weight of the pane, while as the pane carries out a downward movement, loads are friction minus the weight of the pane; and
iii) $(X_1)$ should be as high as possible according to the geometry of the door.

In the event the value $(Y_1)$ is very low, due to space reasons, and to the geometry of the door, a condition that $(X2) \le ((X1)$ should be additionally met.

Preferably, $(X_1)$ is of the order of 100-150 mm, depending on the space available for assembly.

Therefore, according to the invention, it is necessary to keep in mind at least three variables $(Y_1, Y_2, X_1)$ in order for the assembly to be stable depending on the geometry and the loads on each door.

An increased ($Y_1$) involves a higher limitation of rotation of the window lift slider on the track, so that the window lift becomes stronger. On the other hand, ($Y_2$, $X_2$) depend on friction loads.

Regarding the design of the slider of the guide of the vehicle door, guiding inside the door frame may be carried out in three ways:

1- By only providing a single point of contact inside said guide, which allows rotation. In this case, in order to provide stability to the system, ($Y_1$) should be as high as possible, ($X_1$) should be as low as possible and ($Y_2$) depends on the load.

2- Completely guided without possibility of rotation. In this case ($Y_1$) should be as low as possible to avoid hyperstability and to prevent the system from being blocked, and ($X_1$) should be also as low as possible to avoid any possible blocking torques.

3- The slider will have a single point of contact as in the first case, but the pane completely rests on the door frame. In this case ($Y_1$, $Y_2$, $X_1$) should be calculated according to geometry and loads, without considering maximum and minimum values. ($Y_1$) should be an average value to avoid possible plays in the system, while ($Y_2$, $X_2$) should be proportional to ascent and descent loads.

The sliders used in the window lift described according to the present invention are made preferably, but not exclusively, of carbon fiber and combinations thereof with POM, PP66 or other similar plastic materials suitable for this purpose with the addition of materials for promoting slippage and reducing the abrasive nature of the carbon fiber. With the choice of these materials it is possible to obtain sliders which are up to ten times more resistant than the conventional sliders made of POM and the like. Also, the carbon fiber allows reducing noise in use with regard to other materials typically employed for the same purpose.

A further important feature is the mechanical link between the window lift driving means and the lock device of the motor vehicle where it is mounted. Operation of locks in motor vehicles currently involves the use of several electric motors for driving the central locking system and other related devices. The invention proposes the mechanical connection of the window lift driving means with at least some of said devices associated with the lock assembly with the purpose of suppressing at least one of the motors used. In this sense, it should be especially stressed the fact that the feasibility of the mechanical transmission of, for example, the central locking system of a vehicle through the motor of the window lift fixed to the lock thereof is possible thanks to the high gear ration existing between the electric motor output shaft and a screw shaft meshed therewith which would act on the lock mechanism, which may be of the order of 1/70.

More particularly, if the following design variables are taken into consideration in calculation of the window lift driving means:

$\alpha_1$ = arch rotated by the drum. It equals the travel of the driving cable and the length of the pane that is moved;
r = radius of the drum around which the driving cable is wound;
$\beta_1$ = angle rotated by the cable drum (in radians);
$\alpha_2$ = arch rotated by the electric motor before reduction;
$\beta_2$ = angle rotated by the electric motor before the reduction (in radians);
Re = gear ration of the gearmotor between the drum axis and the electric motor output shaft;
it is provided that

$$\alpha_1 = \beta_1 \cdot r$$

and as $Re = \dfrac{\beta_2}{\beta_1}$ , then:

$$\beta_1 = \dfrac{\beta_2}{Re}$$

Therefore, as

$$\alpha_1 = \beta_1 \cdot r$$

Then:

$$\alpha_1 = \frac{\beta_2 \cdot r}{Re}$$

Replacing the variables with typical values in a window lift as in the present invention:

$$r = 5mm$$

$$Re = 70$$

$$\alpha_1 = \frac{\beta_2 \cdot r}{Re} = \frac{\beta_2 \cdot 25}{70}$$

and expressed in degrees:

$$\alpha_1 = \frac{\beta_2 \cdot 25 \cdot \pi}{70 \cdot 180} = 0{,}0062333 \cdot \beta_2$$

$$\alpha_1 = \frac{\beta_2}{160{,}427} \Rightarrow \beta_2 = 160{,}427 \cdot \alpha_1 \quad (in\ mm)$$

That is to say, if the travel length of the pane driving cable is 0,5 m, the electric motor rotates approximately 80°, so that there is an available energy for a mechanism like the lock device (and related mechanisms thereof) that requires a low amount of energy and this does not involve any discernable movements in the window lift. A displacement of 0,5 mm in the drum around which the window lift driving cable is wound is hardly appreciated since there are other factors as the compression of springs, cable, rubbers, etc. before the pane is moved.

The design proposed in the present invention provides many advantages:

- an accurate feasibility study of the window lift for determining stability in use according to the defined variables is thus made possible;
- the use of a window lifting device directly fitted to the lock of the door allows the free room inside the door to be increased;
- the configuration of the window lift driving means according to the present invention allows at least one of the motors associated with the activation of the vehicle lock to be suppressed;
- a window lifting device designed according to the parameters of the present invention allows large sized and high weighted panes to be driven without problems.

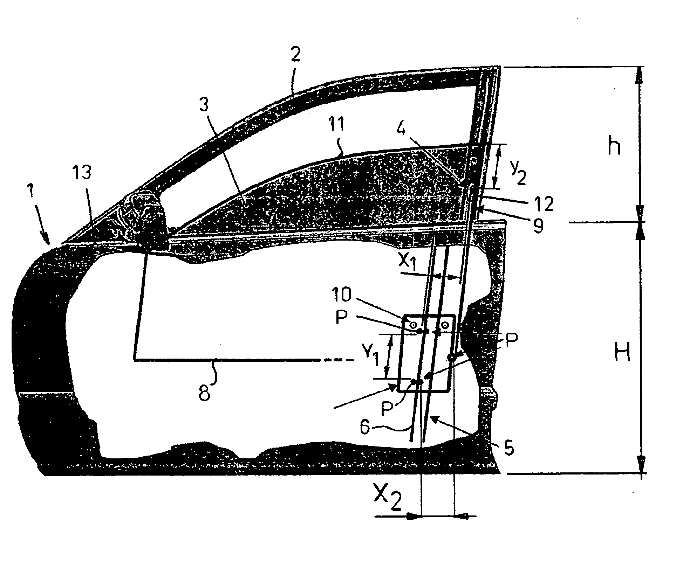

A preferred embodiment of a window lift assembly according to the present invention is now described in detail and by way of a non limitative example, from which the features and the advantages of the invention will be clearly understood. The description that follows is given with reference to the drawing that is herein accompanied which corresponds to a diagrammatic elevational view of a vehicle door having a window lifting device according to the invention, said door being part-way shown cut so that the assembly of guides and sliders as well as the window pane are clearly seen.

The embodiment that is herein described according to the enclosed drawing is an effective solution that makes possible the condition of static and dynamic stability required for a window lift fitted in the lock of the motor vehicle door is met.

In the drawing, a door (1) of a vehicle is shown with the frame (2) where the pane (3) slides. The window lift includes a first guide and slider assembly (4) in the frame (2) of the door (1) and a second guide and slider assembly (5) in the track (6) of the window lift.

The window lift is driven through an electric motor and a gearmotor (not shown).

The slider (7) is fixed to the lower edge (8) of the pane (3) at the fastening points (10), the assembly being mounted fixed to the door lock (1) with the track (6) secured thereto.

The slider (7) is made of carbon fiber and combinations thereof with POM, PP66 or other similar plastic materials suitable for this purpose with the addition of materials for promoting slippage and reducing the abrasive nature of the carbon fiber. Carbon fiber is preferred due to its low noise in use regarding other conventional materials.

The feasibility of this window lift assembly depends on at least three variables $(Y_1, Y_2, X_1)$ which are a function of the geometry and the loads on each door.

Variable $(Y_1)$ corresponds to the distance between two points of contact (P) of the slider (7) in the track (6) measured on a line parallel to said track (6). Variable $(Y_2)$ is the distance from the upper edge (11) of the pane (3) to the fastening point (12) of the slider (4) running through the length (9) of the frame (2) of the door (1). The third design variable $(X_1)$ is the distance from an end of the track (6) -which is secured to the frame (2) of the door (1)- to the points of contact (P) of the slider (7) in the track (6).

A fourth additional variable called $(X_2)$ may be defined corresponding to the horizontal distance between two points of contact (P) of the slider (7) in the track (6).

Other values to be taken into consideration are the height (H) from the lower portion (14) of the door (1) of the vehicle to the belt line (13); and the height (h) of the window of the vehicle.

According to the invention, in order the design of said window lift is made feasible, the condition that $(Y_1)$ is the maximum value possible for generating the maximum resistive torque to withstand the weight of the pane (3) should be met and, at the same time, the condition that $(Y_1) < (H-h)$ should be also met to facilitate the assembly of the slider (7) in the door. It should be also met that $(Y_2)$ is less than the value $(h-Y_2)$ since the descent load is less than the ascent torque due to gravity. As the pane (3) carries out an upward movement, the window lift should overcome friction as well as the weight of the pane (3), while as the pane (3) carries out a downward movement, loads are friction minus the weight of the pane(3). Finally, distance $(X_1)$ should be as greater as possible according to the geometry of the door (1).

If distance $(Y_1)$ is very low, due to space reasons, and to the geometry of the door (1), an additional condition that distance $(X_2)$ is less than or equal to $(X_1)$ should be additionally met, the latter being of the order of 100-150 mm, depending on the space available for assembly.

The increase of distance $(Y_1)$ involves a greater limitation of rotation of the slider (7) of the window lift on the track (6), so that the window lift becomes stronger. On the other hand, distances $(Y_2, X_2)$ depend on friction loads.

Regarding the design of the slider (4) of the door guide (1) of the vehicle, guiding inside the frame (2) of the door (1) may be carried out only providing a single point of contact inside the guide so that rotation is allowed. In this case, to provide stability to the system, distance $(Y_1)$ should be as high as possible, $(X_1)$ should be as low as possible, (Y2) being load dependant.

Guiding inside the frame (2) of the door (1) may be alternatively carried out without possibility of rotation, in which case, distance $(Y_1)$ then should be as low as possible to avoid hyperstability and to prevent the system from being blocked, distance $(X_1)$ then being as low as possible to avoid any possible blocking torques.

Finally, guiding inside the frame (2) of the door (1) may be also carried out according to the invention by providing a single point of contact as in the first case, but with the pane (3) completely resting on the frame (2) of the door (1). In this case $(Y_1, Y_2, X_1)$ should be calculated according to the geometry and the loads, without considering maximum and minimum values. $(Y_1)$ should be an average value to avoid possible plays in the system, while $(Y_2, X_2)$ should be proportional to ascent and descent loads.

Once having been sufficiently described what the present invention consists according to the enclosed drawing, it is understood that modifications can be introduced.

**Claims**

1. Window lift assembly adapted for being fitted in the lock of a motor vehicle comprising a first guide and slider assembly (4) provided in the frame (2) of the door (1) of the vehicle and a second guide and slider assembly (5) provided in the track (6) of the window lift, both having sliders (7) fixed to the window pane (3), means for driving said slider assemblies (4, 5), the window lift assembly being fitted in the lock of the motor vehicle with the track (6) secure thereto, the design of said window lift assembly depending on the distance $Y_1$ between two points of contact (P) of the slider in said track (6) measured on a line parallel to said track (6); on the distance $Y_2$ from the upper edge (11) of the pane (3) to the fastening point (12) of the slider (7) of said first assembly (4) in the pane (3); the distance $X_1$ from an end of the track (6) to the points of contact (P); the horizontal distance $(X_2)$ between two points of contact (P); the height H from the lower portion (14) of the door of the vehicle to the belt line (13); and the height h of the window of the vehicle, **characterized in that** said distance $Y_1$ has its maximum value possible for generating the maximum resistive torque to withstand the weight of the pane (3), at the same time the condition that said value $Y_1$ is less than H-h is met to facilitate assembly of the slider (7) in the door, said distance $Y_2$ being less than the value h-$Y_2$ as the descent load is less than the ascent torque due to the weight of the pane (3); and the value of the distance $X_1$ being as high as possible according to the geometry of the door.

2. Window lift assembly adapted for being fitted in the lock of a motor vehicle as claimed in claim 1, **characterised in that** the distance $X_2$ is less than or equal to the distance $X_1$ in case the value of $Y_1$ is very low due to space, and to the geometry of the door.

3. Window lift assembly adapted for being fitted in the lock of a motor vehicle as claimed in claim 1, **characterised in that** the distance $X_1$ has a value ranging from 100 to 150 mm, depending on the space available for assembly.

4. Window lift assembly adapted for being fitted in the lock of a motor vehicle as claimed in claim 1, **characterised in that** said window lift driving means are mechanically linked to a lock assembly of the vehicle allowing any mechanical driving means of said lock assembly, or any mechanisms associated therewith, to be suppressed.

5. Window lift assembly adapted for being fitted in the lock of a motor vehicle as claimed in claim 1, **characterised in that** the slider fitted in the guide of the frame (2) of the door provides only a single point of contact inside of said guide allowing rotation of the slider, so that the value of distance $Y_1$ is as high as possible, the value of $X_1$ being as low as possible, and $Y_2$ depending of the load.

6. Window lift assembly adapted for being fitted in the lock of a motor vehicle as claimed in claim 1, **characterised in that** the slider fitted in the guide of the frame (2) of the door of the vehicle is completely guided without possibility of rotation, distance $Y_1$ being as low as possible to avoid hyperstability and to prevent the system from being blocked, and the value $X_1$ being as low as possible to avoid any possible blocking torques.

7. Window lift assembly adapted for being fitted in the lock of a motor vehicle as claimed in claim 1, **characterised in that** the slider fitted in the guide of the frame (2) of the door of the vehicle has a single point of contact, the pane (3) completely resting on the frame (2), so that the value taken by the design variables $Y_1$, $Y_2$, $X_1$ depends on the geometry and on the loads of the assembly, value $Y_1$ having to be an average value to avoid any possible plays in the assembly, and distances $Y_2$, $X_2$ being proportional to the ascent and descent loads of the pane (3).

**Patentansprüche**

1. Fensterhebevorrichtung zum Einbau in das Türschloss eines Kraftfahrzeugs, bestehend aus einer ersten Gleitführungsvorrichtung (4), die im Rahmen (2) der Tür (1) des Fahrzeugs vorgesehen ist, und einer zweiten Gleitführungsvorrichtung (5), die in der Führungsschiene (6) des Fensterhebers vorgesehen ist, wobei beide mit an der Fensterscheibe (3) befestigten Gleitern (7) versehen sind, sowie aus Mitteln zum Antrieb dieser Gleitvorrichtungen (4, 5), wobei die Fensterhebevorrichtung mit der daran gesicherten Führungsschiene (6) im Türschloss des Kraftfahrzeugs befestigt ist und wobei die Auslegung dieser Fensterhebevorrichtung von dem Abstand $Y_1$ zwischen zwei Kontaktpunkten (P) des Gleiters in der Führungsschiene (6), gemessen auf einer parallel zur Führungsschiene (6) verlaufenden Linie, abhängig ist; von dem Abstand $Y_2$ zwischen der Oberkante (11) der Fensterscheibe (3) und dem Befestigungspunkt (12) des Gleiters (7) der ersten Vorrichtung (4) an der Fensterscheibe (3); von dem Abstand $X_1$ zwischen einem Ende der Führungsschiene (6) und den Kontaktpunkten (P); von dem horizontalen Abstand $X_2$ zwischen zwei Kontaktpunkten (P); von der Höhe H vom unteren Teil (14) der Fahrzeugtür bis zur Gurtlinie (13); und von der Höhe h des Fahrzeugfensters, **dadurch gekennzeichnet, dass** der Abstand $Y_1$ den höchstmöglichen Wert besitzt, um ein maximales Widerstandsmoment zu erzeugen, sodass dem Gewicht der Fensterscheibe (3) standgehalten werden kann, wobei gleichzeitig die Bedingung erfüllt ist, dass der Wert $Y_1$ kleiner ist als H-h, um die Montage des Gleiters (7) in die Tür zu erleichtern, dass der Abstand $Y_2$ kleiner ist als der Wert h-$Y_2$, da aufgrund des Gewichts der Fensterscheibe (3) die Senklast geringer ist als das Hubmoment; und wobei der Wert des Abstandes $X_1$ entsprechend der Türgeometrie so hoch wie möglich ist.

2. Fensterhebevorrichtung zum Einbau in das Türschloss eines Kraftfahrzeugs nach Anspruch 1, **dadurch gekennzeichnet, dass** der Abstand $X_2$ kleiner als oder gleich groß wie der Abstand $X_1$ ist, wenn der Wert $Y_1$ aus Platzgründen und aufgrund der Türgeometrie sehr niedrig ist.

3. Fensterhebevorrichtung zum Einbau in das Türschloss eines Kraftfahrzeugs nach Anspruch 1, **dadurch gekennzeichnet, dass** der Wert des Abstandes $X_1$ je nach dem für die Vorrichtung vorhandenen Platz in einem Bereich zwischen 100 und 150 mm liegt.

4. Fensterhebevorrichtung zum Einbau in das Türschloss eines Kraftfahrzeugs nach Anspruch 1, **dadurch gekennzeichnet, dass** die Antriebsmittel für die Fensterhebevorrichtung mit einer Schließvorrichtung des Fahrzeugs mechanisch gekoppelt sind, sodass jegliche mechanischen Antriebsmittel dieser Schließvorrichtung oder jegliche damit verbundene Mechanismen unterdrückt werden.

5. Fensterhebevorrichtung zum Einbau in das Türschloss eines Kraftfahrzeugs nach Anspruch 1, **dadurch gekennzeichnet, dass** der Gleiter, der in der Führung des Rahmens (2) der Tür befestigt ist, nur einen einzigen Kontaktpunkt innerhalb der Führung aufweist, was die Drehung des Gleiters ermöglicht, sodass der Wert des Abstandes $Y_1$ so hoch wie möglich, der Wert von $X_1$ so niedrig wie möglich und $Y_2$ von der Last abhängig ist.

6. Fensterhebevorrichtung zum Einbau in das Türschloss eines Kraftfahrzeugs nach Anspruch 1, **dadurch gekennzeichnet, dass** der in der Führung des Rahmens (2) der Fahrzeugtür befestigte Gleiter ganz ohne Drehmöglichkeit geführt wird, wobei der Abstand $Y_1$ so klein wie möglich ist, um eine Hyperstabilität zu vermeiden und eine Blockierung des Systems zu verhindern, und wobei der Wert $X_1$ so niedrig wie möglich ist, um eventuelle Blockiermomente zu vermeiden.

7. Fensterhebevorrichtung zum Einbau in das Türschloss eines Kraftfahrzeugs nach Anspruch 1, **dadurch gekennzeichnet, dass** der in der Führung des Rahmens (2) der Fahrzeugtür befestigte Gleiter einen einzigen Kontaktpunkt hat, wobei die Fensterscheibe (3) vollkommen auf dem Rahmen (2) ruht, sodass der von den Auslegungsvariablen $Y_1$, $Y_2$, $X_1$ angenommene Wert von der Geometrie und der Belastung der Vorrichtung abhängig ist, wobei der Wert $Y_1$ ein Durchschnittswert sein muss, um jegliches Spiel in der Vorrichtung zu vermeiden, und die Abstände $Y_2$, $X_2$ proportional zur Hub- und Senklast der Fensterscheibe (3) sein müssen.

## Revendications

1. Dispositif de levage de vitre adapté pour être logé dans la serrure d'un véhicule à moteur comprenant un premier assemblage de guide et d'élément coulissant (4) inséré dans le cadre (2) de la portière (1) du véhicule et d'un second assemblage de guide et d'élément coulissant (5) inséré dans le rail (6) du levage de la vitre, les deux ayant des éléments coulissants (7) fixés à la vitre (3), des moyens pour activer ces assemblages d'élément coulissant (4, 5), l'assemblage de levage de la vitre étant logé dans la serrure du véhicule à moteur avec le rail (6) fixé à celle-ci, la conception de cet assemblage de levage de vitre dépendant de la distance Y entre deux points de contact (P) de l'élément coulissant dans ce rail (6) mesurée sur une ligne parallèle à ce rail (6) ; de la distance Y2 depuis le bord supérieur (11) de la vitre (3) au point de fixation (12) de l'élément coulissant (7) de ce premier assemblage (4) dans la serrure (3) ; de la distance X1 depuis une extrémité de ce rail (6) aux points de contact (P) ; de la distance horizontale (X2) entre deux points de contact (P) ; de la hauteur H depuis la portion inférieure (14) de la portière du véhicule, **caractérisé par le fait que** cette distance Y1 a une valeur maximum possible pour générer le couple résistif maximum pour résister au poids de la vitre (3) ; en même temps, la condition que cette valeur Y1 est inférieure à H-h est réunie pour faciliter l'assemblage de l'élément coulissant (7) dans la vitre, cette distance Y2 étant inférieure à la valeur h-Y2 car la charge de descente est inférieure au couple de montée en raison du poids de la vitre (3) ; et la valeur de la distance X1 étant la plus élevée possible conformément à la géométrie de la portière.

2. Dispositif de levage de vitre adapté pour être logé dans la serrure d'un véhicule à moteur comme indiqué dans la revendication 1, **caractérisé par le fait que** la distance X2 est inférieure ou égale à la distance X1 dans le cas où la valeur de Y1 serait très faible en raison de l'espace et de la géométrie de la portière.

3. Dispositif de levage de vitre adapté pour être logé dans la serrure d'un véhicule à moteur comme indiqué dans la revendication 1, **caractérisé par le fait que** la distance X1 a une valeur comprise entre 100 et 150 mm, en fonction de l'espace disponible pour l'assemblage.

4. Dispositif de levage de vitre adapté pour être logé dans la serrure d'un véhicule à moteur comme indiqué dans la revendication 1, **caractérisé par le fait que** ces moyens d'activation de levée de la vitre sont mécaniquement reliés à un assemblage de serrure du véhicule permettant de supprimer tout moyen d'activation mécanique de cet assemblage de serrure, ou tout mécanisme associé.

**5.** Dispositif de levage de vitre adapté pour être logé dans la serrure d'un véhicule à moteur comme indiqué dans la revendication 1, **caractérisé par le fait que** l'élément coulissant logé dans la guide du cadre (2) de la portière fournit uniquement un seul point de contact à l'intérieur de ce guide permettant la rotation de l'élément coulissant, de sorte que la valeur de la distance Y1 soit la plus élevée possible, la valeur de X1 étant la plus basse possible, et Y2 dépendant de cette charge.

**6.** Dispositif de levage de vitre adapté pour être logé dans la serrure d'un véhicule à moteur comme indiqué dans la revendication 1, **caractérisé par le fait que** l'élément coulissant logé dans le guide du cadre (2) de la portière du véhicule est complètement guidé sans aucune possibilité de rotation, la distance Y1 étant la plus courte possible pour éviter l'hyperstabilité ainsi que le blocage du système, et la valeur X1 étant la plus faible possible pour éviter tout possible blocage des couples.

**7.** Dispositif de levage de vitre adapté pour être logé dans la serrure d'un véhicule à moteur comme indiqué dans la revendication 1, **caractérisé par le fait que** l'élément coulissant logé dans le guide du cadre (2) de la portière du véhicule a un seul point de contact, la vitre (3) restant complètement dans le cadre (2), de sorte que la valeur prise par les variables de la conception (Y1, Y2, X1) dépend de la géométrie et de la charge sur l'assemblage, la valeur Y1 devant être une valeur moyenne pour éviter tout possible jeu dans l'assemblage, et les distances Y2, X2 étant proportionnelles aux charges de montée et de descente de la vitre (3).